# EUROPEAN PATENT SPECIFICATION

(11) **EP 2 958 366 B1**
(45) Date of publication and mention of the grant of the patent: **26.09.2018**
(21) Application number: 15180123.0
(22) Date of filing: 15.01.2002
(51) Int. Cl.: H04W 28/08, H04W 92/14

(54) **INTERCONNECTING CORE NETWORK NODES AND RADIO ACCESS NETWORK NODES IN A TELECOMMUNICATION NETWORK**
VERKNÜPFUNG VON KERNNETZKNOTEN IN EINEM TELEKOMMUNIKATIONSNETZWERK
GESTION D'UN RÉSEAU DE TÉLÉCOMMUNICATIONS

(30) Priority: 15.01.2001 EP 01100848
(43) Date of publication of application: 23.12.2015
(62) Divisional of application: 02708286.6
(73) Proprietor: Telefonaktiebolaget LM Ericsson (publ), 164 83 Stockholm (SE)
(72) Inventor: Leschinski, Ulrich, 52078 Aachen (DE); Stümpert, Martin, 67691 Hochspeyer (DE)
(74) Representative: Ericsson

(56) References cited:
- WO-A-99/35800
- US-A- 6 091 953
- NOKIA: "Introducing flexibility to the Iu interface", 3GPP DRAFT; R3-002586_IUFLEXIBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Windsor, UK; 20001012, 12 October 2000 (2000-10-12), XP050148134, [retrieved on 2000-10-12]
- ETSI: "TS 125 413 Universal Mobile Telecommunications System (UMTS);UTRAN Iu Interface RANAP Signalling (3G TS 25.413 Version 3.0.0 Release 1999)", ETSI TS 125 413 V3.0.0, XX, XX, January 2000 (2000-01), pages 1-147, XP002165163,

## Description

### Technical Field

The invention relates to a method for controlling connections in a telecommunication network, a telecommunication network to perform that method, related methods for controlling a core network node, and related methods for controlling a radio access network node.

### Background

A telecommunication network for mobile communication comprises a radio access network that controls the assignment of radio channels and a core network that is in charge of calls, controls the mobility management of subscribers and interconnects radio access network nodes of the radio access network.

According to the state of the art a hierarchical relation exists between the core network nodes of the core network and the radio access network. Each core network node is related to one or more radio access network nodes and each radio access network node is related to one core network node. A core network node can address a related radio access network using a local identification of the radio access network node. As only one core network node is related to each radio access network node, there is no need for a radio access network node to identify the related core network node.

If the hierarchical relation between core network nodes and radio access network nodes is broken up, so that a plurality of radio access network nodes can be contacted by a plurality of core network nodes, there is no method known how a radio access network node can address a core network node, and there is no method known, how a core network node can address each radio access network node in the telecommunication network.

Document TSGR3#16(00)2586 "Introducing flexibility to the lu Interface" from TSG-RAN Working Group 3, meeting #16, Agenda Item 12a) from 16-20 October 2000 discloses an example situation of an IP network which connects SGSNs and RNCs as a one-to-many relation between the RNC and the CN elements (RNC to many CN elements).

### Summary

Therefore it is object of the invention to provide method for addressing a radio access network node from a core network node and a method for addressing a core network node from a radio access network node in a telecommunication network that has no hierarchical relation between core network nodes and radio access network nodes.

This object is achieved by the independent claims. Advantageous embodiments are described in the dependent claims.

According to an embodiment a method for controlling a telecommunication network that comprises a core network with at least two core network nodes, a radio access network with at least two radio access network nodes, and an interface for connecting the core network and the radio access network is provided. A core network node is connectable to at least two radio access network nodes of the radio access network via the interface and a radio access network node is connectable to at least two core network nodes of the core network via the interface. A relocation request message is sent from a core network node to a radio access network node over the interface, the relocation request message comprising an identification of the sending core network node. The identification is unique within the telecommunication network, identifying the core network node on the level of the Radio Access Network Application Part, RANAP, protocol, and the relocation request message is indicating that the radio access network node is selected as radio access network node that is in charge of a connection between a terminal and the radio access network. The relocation request message comprises an identification of a connection for the terminal between the core network and the radio access network over the interface, wherein the identification of the connection is an lu connection identifier. The radio access network node stores the identification of the core network node and the identification of the connection for the terminal between the core network and the radio access network over the interface. A reset message is sent from the core network node to the radio access network node over the interface, wherein the reset message is indicating that in the sending core network node a failure has occurred that resulted in a loss of transaction reference information. The reset message comprises the identification of the core network node. The radio access network node analyses the identification of the core network node and releases the connection for the terminal between the core network and the radio access network over the interface.

According to another embodiment a telecommunication network is provided, comprising a core network with at least two core network nodes, a radio access network with at least two radio access network nodes, and an interface for connecting the core network and the radio access network. A core network node is connectable to at least two radio access network nodes of the radio access network via the interface, a radio access network node is connectable to at least two core network nodes of the core network via the interface. The interface is adapted to transmit a relocation request message from a core network node to a radio access network node, the relocation request message comprising an identification of the sending core network node, wherein the identification is unique within the telecommunication network, identifying the core network node on the level of the Radio Access Network Application Part, RANAP, protocol. The relocation request message is indicating that the radio access network node is selected as radio access network node that is in charge of a connection between a terminal and the radio access network. The relocation request message comprises an identification of a connection for the terminal between the core network and the radio access network over the interface. The radio access network node is adapted to store the identification of the core network node and the identification of the connection for the terminal between the core network and the radio access network over the interface. The radio access network node is further adapted to receive a reset message from the core network node via the interface, wherein the reset message is indicating that in the sending core network node a failure has occurred that resulted in a loss of transaction reference information. The reset message comprises the identification of the core network node. The radio access network node is adapted to analyse the identification of the core network node and to release the connection for the terminal between the core network and the radio access network over the interface.

According to another embodiment, a radio access network node in a radio access network of a telecommunication network is provided, wherein the telecommunication network comprises a core network with at least two core network nodes, the radio access network with at least two radio access network nodes, and an interface for connecting the core network and the radio access network. A core network node is connectable to at least two radio access network nodes of the radio access network via the interface and a radio access network node is connectable to at least two core network nodes of the core network via the interface. The radio access network node is adapted to receive, over the interface, a relocation request message from a core network node, the relocation request message comprises an identification of the sending core network node, wherein the identification is unique within the telecommunication network, identifying the core network node on the level of the Radio Access Network Application Part, RANAP, protocol. The relocation request message is indicating that the radio access network node is selected as radio access network node that is in charge of a connection between a terminal and the radio access network. The relocation request message comprises an identification of a connection for the terminal between the core network and the radio access network over the interface, wherein the identification of the connection is an lu connection identifier. The radio access network node is further adapted to store the identification of the core network node and the identification of the connection for the terminal between the core network and the radio access network over the interface. The radio access network node is further adapted to receive, over the interface, a reset message from the core network node, wherein the reset message indicates that in the sending core network node a failure has occurred that resulted in a loss of transaction reference information. The reset message comprises the identification of the core network node. The radio access network node is further adapted to analyse the identification of the core network node, and to release the connection for the terminal between the core network and the radio access network over the interface.

In a further embodiment a core network node in a core network of a telecommunication network is provided, wherein the telecommunication network comprises the core network with at least two core network nodes, a radio access network with at least two radio access network nodes, and an interface for connecting the core network and the radio access network, wherein a core network node is connectable to at least two radio access network nodes of the radio access network via the interface and a radio access network node is connectable to at least two core network nodes of the core network via the interface. The core network node is adapted to send, over the interface, a relocation request message to the radio access network node. The relocation request message comprises an identification of the sending core network node, wherein the identification is unique within the telecommunication network, identifying the core network node on the level of the Radio Access Network Application Part, RANAP, protocol. The relocation request message is indicating that the radio access network node is selected as radio access network node that is in charge of a connection between a terminal and the radio access network, wherein the relocation request message comprises an identification of a connection for the terminal between the core network and the radio access network over the interface, wherein the identification of the connection is an lu connection identifier. The core network node is further adapted to send, over the interface, a reset message to the radio access network node, wherein the reset message indicates that in the sending core network node a failure has occurred that resulted in a loss of transaction reference information. The reset message comprises the identification of the core network node.

### Brief Description of the Figures

The following figures show:
- Fig. 1:: depicts a core network node, a radio access network node and messages that are transmitted between the core network node and the radio access network node according to the invention;
- Fig. 2:: depicts a core network, a radio access network and a terminal that is connected to the radio access network.

### Detailed Description

In the following the invention is described in more detail by means of embodiments and figures. Equal reference signs indicate equal elements.

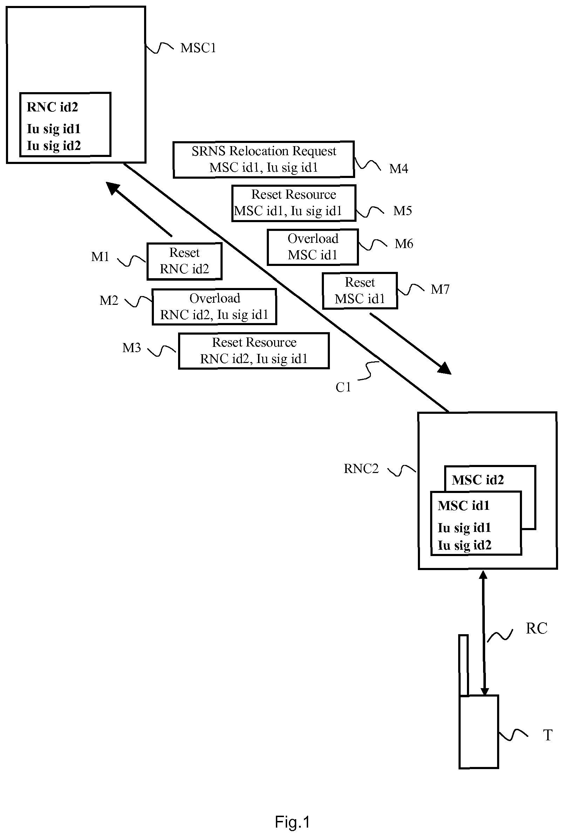

Figure 1 depicts a core network node MSC1 that is connected to a radio access network node RNC2 and messages M1, M2, M3, M4, M5, M6, M7 that are transmitted between the core network node MSC1 and the radio access network node RNC2. Figure 1 further depicts a terminal T that is connected to the radio access network node RNC2 via a radio connection RC and a connection C1 between the radio access network node RNC2 and the core network node MSC1 for the terminal T.

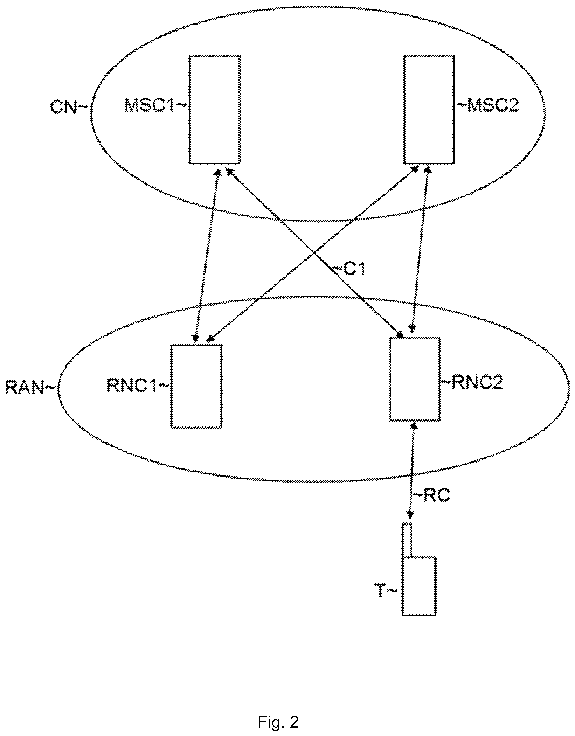

Figure 2 depicts a core network CN comprising the core network nodes MSC1 and MSC2, a radio access network RAN comprising the radio access network nodes RNC1 and RNC2, wherein the core network node MSC1 is connectable to the radio access network nodes RNC1 and RNC2 and the core network node MSC2 is connectable to the radio access network nodes RNC1 and RNC2 via an interface connecting the core network CN and the radio access network RAN. Figure 2 further depicts a terminal T that is connected to the radio access network node RNC2 via a radio connection RC and a connection C1 between the radio access network node RNC2 and the core network node MSC1 for the terminal T.

The terminal T is roaming in the coverage area of a telecommunication network that comprises the core network CN and the radio access network RAN. The telecommunication network can be for example a GPRS (General Packet Radio Service) network or UMTS (Universal Mobile Telecommunication System) network. The core network node MSC1 can be for example a MSC (mobile services switching centre) and the radio access network node RNC2 can be a RNC (radio network controller). The mobile station is visiting a subarea of the coverage area of the telecommunication network that is administrated by the radio access network node RNC1. The radio access network node RNC1 is in charge of a radio connection to the terminal T and the radio access network node RNC1 is terminating the interface between the radio access network and the core network for the terminal T. The interface between the radio access network and the core network CN can be for example an lu interface. The mobile station is entering a subarea of the coverage area of the telecommunication system that is administrated by the radio access network node RNC2. According to radio measurements that are performed on the radio connection between the radio access network RAN and the terminal T, the radio access network node RNC1 determines the radio access network node RNC2 as new radio access network node that is in charge of a connection RC between the terminal T and the radio access network RAN. The core network node MSC1 sends a relocation request message M4 over the interface towards the radio access network node RNC2 that indicates that the radio access network node RNC2 has been selected as new radio access network node that is in charge of a connection RC to the terminal T. The message M4 comprises an identification of the connection C1 for the terminal between the core network node MSC1 and the radio access network node RNC2 over the interface and an identification of the core network node MSC1 from which the core network node MSC1 is identifiable within the telecommunication network. The identification of the core network node MSC1 is unique within the telecommunication network. The unique identification of the core network node MSC1 can be a global title, for example an MSC id (mobile services switching centre identification), for identifying the core network node on the level of the SCCP (Signalling Connection Control Part) protocol according to the 3G TS 25.410, (Version 3.3.0, published December 2000) of the 3rd Generation Partnership project or an mobile services switching centre address for identifying the core network node on the level of the RANAP (Radio Access Network Application Part) protocol according to the TS 25.413 (Version 3.4.0, published December 2000) of the 3rd Generation Partnership project. The identification of the connection can be for example an lu connection identifier according to the TS 25.413, (Version 3.4.0, published December 2000) of the 3rd Generation Partnership project. The identification of the core network node MSC1 and the identification of the connection C1 are stored by the radio access network node RNC2.

The identification of the core network node MSC1 can be used by the radio access network node RNC2 to address the core network node MSC1 e.g. if a failure in the radio access network node has occurred that resulted in a loss of transaction reference information. To indicate such a failure, the radio access network node RNC2 sends a RESET message M1 to the core network node MSC1, the RESET message comprising an identification of the radio access network node RNC2, the identification of the radio access network node RNC1 being unique within the telecommunication network. The unique identification of the radio access network node can be a global title, for example a RNC id (radio network controller identification), for identifying the radio access network node on the level of the SCCP (Signalling Connection Control Part) protocol according to the 3G TS 25.410, (Version 3.4.0, published December 2000) of the 3rd Generation Partnership project. The core network node MSC1 analyses the identification of the radio access network node RNC2 and releases the connections to the radio access network node RNC2 and the references related to the connections.

If in core network node MSC1 a failure has occurred that resulted in a loss of transaction reference information, the core network node MSC1 addresses the radio access network node RNC2 using the identification of the radio access network node that is a unique identification within the telecommunication network. To indicate the failure the core network node MSC1 sends a RESET message M7 to the radio access network node RNC2, the message M7 comprising an identification of the core network node MSC1. The radio access network node RNC2 analyses the identification of the core network node and releases the connections to the core network node MSC1 and the radio connections and references that are related to the connections to the core network node MSC1.

If in the radio access network node RNC2 the connection C1 to the core network node MSC1 has failed, the radio access network node uses the identification of the core network node MSC1 to address the core network node MSC1. To indicate the connection failure the radio access network node RNC2 sends a RESET RESOURCE message M3 to the core network node MSC1, the message M3 comprising an identification of the radio access network node RNC2, which is a unique identification within the network, and an identification of the connection C1. The core network node MSC1 analyses the identification of the connection C1 and the identification of the radio access network node RNC2 and releases the connection C1 and the references and resources related to the connection.

If in the core network node MSC1 the connection C1 has failed, the core network node MSC1 addresses the radio access network node RNC2 using the identification of the radio access network node RNC2 that is a unique identification within the telecommunication network. To indicate the connection failure the core network node sends a RESET RESOURCE message M5 to the radio access network node RNC2, the message M5 comprising an identification of the core network node MSC1, which is a unique identification within the network, and an identification of the connection C1. The radio access network node RNC2 analyses the identification of the core network node CN1 and the identification of the connection C1 and releases the connection C1, the radio connection RC that is related to the connection C1, and the references and the resources that are related to the connection C1.

If the radio access network node RNC2 is overloaded with traffic, the radio access network node uses the identification of the core network node MSC1 to address the core network node MSC1. To indicate that the traffic at the radio access network node RNC1 should be reduced, the radio access network node RNC2 sends an OVERLOAD message M2 to the core network node MSC1, the message M2 comprising an identification of the radio access network node RNC2. The core network node MSC1 analyses the identification of the radio access network node RNC2 and reduces the traffic to radio access network node RNC2.

If the core network node MSC1 is overloaded with traffic, the core network node MSC1 addresses the radio access network node RNC2 using the identification of the radio access network node RNC2 that is a unique identification within the telecommunication network. To indicate that the traffic at the core network node MSC1 should be reduced, the core network node MSC1 sends an OVERLOAD message M6 to the radio access network node RNC2, the OVERLOAD message M6 comprising an identification of the core network node MSC1. The radio access network node RNC2 analyses the identification of the core network node MSC1 and reduces the traffic to the core network node MSC1.

In an embodiment the radio access network node can terminate the interface between core network and the radio access network node for the terminal T.

The invention further relates to a computer program that is adapted to control a core network node or a radio access network node in way that the node performs at least one of the methods as described above.

In the following further aspects of the invention are disclosed.

According to a first aspect a method for controlling a telecommunication network is provided that comprises a core network CN with at least two core network nodes MSC1; MSC2, a radio access network RAN with at least two radio access network nodes RNC1; RNC2, and an interface for connecting the core network CN and the radio access network RAN, wherein a core network node is connectable to at least two radio access network nodes of the radio access network via the interface and a radio access network node is connectable to at least two core network nodes of the core network via the interface, and wherein a message M1; M2; M3; M4; M5; M6; M7 is sent between a core network node MSC1 and a radio access network node RNC2 over the interface, the message comprising an identification of the sending node, wherein the identification is unique within the telecommunication network.

It is an advantage of the proposed method that the terminal can roam in the telecommunication system during a call and remain connected to only one core network node. This saves network internal traffic, as the dataset related to the terminal that is stored in the core network node does not need to be transferred to a further core network node.

According to a second aspect a method according to the first aspect is provided, wherein a global title is used as identification of the sending node MSC1; RNC2. Advantageous is the usage of a global title as identification of the sending node according to the second aspect. A global title is an identification of a network node that is already used in existing networks and the usage of a global title as identification of the sending node can be implemented easily.

According to a third aspect a method cording to the first or second aspect is provided, wherein the message M1; M2; M3 is sent from the radio access network node RNC2 to the core network node MSC1.

According to a fourth aspect a method according to the first or second aspect is provided, wherein the message M4; M5; M6; M7 is sent from the core network node MSC1 to the radio access network node RNC2.

According to a fifth aspect, a method according to fourth aspect is provided, wherein a mobile services switching centre identification is used as identification of the core network node MSC1. The mobile services switching centre identification is an identification of a core network node that is already used in existing networks, and that can be implemented easily.

According to a sixth aspect a method according to any of the first to fifth aspects is provided, wherein the radio access network node RNC2 is in charge of a connection RC to a terminal T, and wherein the message M1; M7 is indicating that in the sending node MSC1; RNC2 a failure has occurred that resulted in a loss of transaction reference information.

According to a seventh aspect a method according to any of the first to fifth aspects is provided, wherein the radio access network node RNC2 is in charge of a connection RC to a terminal T, wherein the message M3; M5 is indicating that a connection C1 between the core network CN and the radio access network RAN over the interface has failed, and the message M3; M5 comprises an identification of the connection C1.

According to an eighth aspect, a method according any of the first to fifth aspects is provided, wherein the radio access network node RNC2 is in charge of a connection RC to a terminal T, wherein the message M2; M6 is indicating that the sending node MSC1; RNC2 is overloaded with traffic. This has the advantage that the distribution of traffic among the network nodes can be controlled.

According to a ninth aspect a method according to the fourth and fifth aspect is provided, wherein the message M4 is indicating that the radio access network node RNC2 is selected as radio access network node that is in charge of a connection RC to a terminal T, wherein the message comprises an identification of a connection C1 for the terminal T between the core network CN and the radio access network RAN over the interface.

According to a tenth aspect, a method according to the ninth aspect is provided, wherein the radio access network node RNC2 stores the identification of the core network node and the identification of the connection for the terminal between the core network and the radio access network over the interface.

According to an eleventh aspect a method for controlling a connection in a core network node MSC1 of a telecommunication network is provided, comprising the steps of receiving a message M3 indicating that a connection between the core network node MSC1 and a radio access network node RNC2 has failed, wherein the message comprises an identification of the connection and an identification of the radio access network node RNC2, and wherein the identification of the radio access network node RNC2 is unique within the telecommunication network, analysing the indication of the radio access network node RNC2 and the indication of the connection, and releasing the connection related to the received indication of the connection and the received indication of the radio access network node RNC2.

According to a twelfth aspect a method for controlling connections in a core network node of a telecommunication network is provided, comprising the steps of receiving a message M1 indicating that in a radio access network node RNC2 a failure has occurred that resulted in a loss of transaction reference information, the message comprising an identification of the radio access network node RNC2, the identification being unique within the telecommunication network, analysing the identification and releasing one or more connections to the radio access network node RNC2.

According to a thirteenth aspect a method for controlling connections in a radio access network node RNC2 of a telecommunication network is provided, comprising the steps of receiving a message M5 indicating that a first connection between the radio access network node RNC2 and a core network node MSC1 has failed, the message comprising an identification of the first connection and an identification of the core network node MSC1, the identification of the core network node MSC1 being unique within the telecommunication network, analysing the received indication of the core network node MSC1 and the indication of the first connection and releasing the first connection and a radio connection that is related to the first connection.

Further advantageous is a method wherein the message is indicating that in the sending node a connection has failed according to the seventh, eleventh and thirteenth aspects. This is advantageous, as the references and resources related to the connections can be reassigned.

According to a fourteenth aspect a method for controlling connections in a radio access network node RNC2 of a telecommunication network is provided, comprising the steps of receiving a message M7 indicating that in a core network node MSC1 a failure has occurred that resulted in a loss of transaction reference information, the message M7 comprising an identification of the core network node MSC1, the identification being unique within the telecommunication network, analysing the received indication and releasing one or more connections of the radio access network node RNC2 to the core network node MSC1 and one or more radio connections of the radio access network node RNC2 that are related to the connections of the radio access network node RNC2 to the core network node MSC1.

Further advantageous is a method wherein the message is indicating that in the sending node a failure has occurred that resulted in a loss of transaction reference information according to the sixth, twelfth and fourteenth aspects. By this the references related to the connections to the sending node can be reassigned.

According to a fifteenth aspect a method according to any of the first to twelfth aspects is provided, wherein the core network node MSC1; MSC2 is a mobile services switching centre. This is advantageous as identifications for mobile services switching centres, which are unique identifications within the network, are already used and can be implemented easily.

According to a sixteenth aspect a method according to any of the first to tenth, thirteenth and fourteenth aspects is provided, wherein the radio access network node RNC1; RNC2 is a radio network controller. This is advantageous as identifications for radio access network nodes, which are unique identifications within the network, are already used and can be implemented easily.

According to a seventeenth aspect a core network node MSC1; MSC2 is provided that is adapted to perform any of the methods of the eleventh and twelfth aspects.

According to an eighteenth aspect a radio access network node RNC1; RNC2 is provided that is adapted to perform any of the methods of the thirteenth and fourteenth aspects.

According to a nineteenth aspect a telecommunication network is provided comprising a core network CN with at least two core network nodes MSC1; MSC2, a radio access network RAN with at least two radio access network nodes RNC1; RNC2, and an interface for connecting the core network CN and the radio access network RAN, wherein a core network node is connectable to at least two radio access network nodes of the radio access network via the interface, a radio access network node is connectable to at least two core network nodes of the core network via the interface, the interface is adapted to transmit a message M1; M2; M3; M4; M5; M6; M7 between a core network node MSC1 and a radio access network node RNC2, the message comprising an identification of the sending node, wherein the identification is unique within the telecommunication network.

## Claims

1. Method for controlling a telecommunication network that comprises a core network (CN) with at least two core network nodes (MSC1; MSC2), a radio access network (RAN) with at least two radio access network nodes (RNC1; RNC2), and an interface for connecting the core network (CN) and the radio access network (RAN),
- wherein a core network node (MSC1; MSC2) is connectable to at least two radio access network nodes (RNC1; RNC2) of the radio access network (RAN) via the interface and a radio access network node (RNC1; RNC2) is connectable to at least two core network nodes (MSC1; MSC2) of the core network (CN) via the interface,
- wherein a relocation request message (M4) is sent from a core network node (MSC1) to a radio access network node (RNC2) over the interface, the relocation request message (M4) comprising an identification of the sending core network node (MSC1),
- wherein the identification is unique within the telecommunication network, identifying the core network node (MSC1) on the level of the Radio Access Network Application Part, RANAP, protocol, and
- wherein the relocation request message (M4) is indicating that the radio access network node (RNC2) is selected as radio access network node that is in charge of a connection (RC) between a terminal (T) and the radio access network (RAN),
- wherein the relocation request message (M4) comprises an identification of a connection (C1) for the terminal (T) between the core network (CN) and the radio access network (RAN) over the interface, wherein the identification of the connection (C1) is an lu connection identifier, and
- wherein the radio access network node (RNC2) stores the identification of the core network node (MSC1) and the identification of the connection (C1) for the terminal (T) between the core network (CN) and the radio access network (RAN) over the interface,
- wherein a reset message (M7) is sent from the core network node (MSC1) to the radio access network node (RNC2) over the interface,
- wherein the reset message (M7) is indicating that in the sending core network node (MSC1) a failure has occurred that resulted in a loss of transaction reference information,
- the reset message (M7) comprises the identification of the core network node,
- wherein the radio access network node (RNC2) analyses the identification of the core network node (MSC1) and releases the connection (C1) for the terminal between the core network (CN) and the radio access network (RAN) over the interface.

2. Method according to claim 1, wherein a mobile services switching center identification is used as identification of the core network node (MSC1).

3. Method according to any of the claims 1 or 2, wherein the radio access network node (RNC1; RNC2) is a radio network controller.

4. Telecommunication network comprising a core network (CN) with at least two core network nodes (MSC1; MSC2), a radio access network (RAN) with at least two radio access network nodes (RNC1; RNC2), and an interface for connecting the core network (CN) and the radio access network (RAN),
- wherein a core network node (MSC1; MSC2) is connectable to at least two radio access network nodes (RNC1; RNC2) of the radio access network (RAN) via the interface, a radio access network node (RNC1; RNC2) is connectable to at least two core network nodes (MSC1; MSC2) of the core network (CN) via the interface,
- the interface is adapted to transmit a relocation request message (M4) from a core network node (MSC1) to a radio access network node (RNC2),
- the relocation request message (M4) comprising an identification of the sending core network node (MSC1),
- wherein the identification is unique within the telecommunication network, identifying the core network node (MSC1) on the level of the Radio Access Network Application Part, RANAP, protocol, and
- wherein the relocation request message (M4) is indicating that the radio access network node (RNC2) is selected as radio access network node that is in charge of a connection (RC) between a terminal (T) and the radio access network (RAN),
- wherein the relocation request message (M4) comprises an identification of a connection (C1) for the terminal (T) between the core network (CN) and the radio access network (RAN) over the interface,
- wherein the radio access network node (RNC2) is adapted to store the identification of the core network node (MSC1) and the identification of the connection (C1) for the terminal between the core network (CN) and the radio access network (RAN) over the interface,
- wherein the radio access network node (RNC2) is further adapted to receive a reset message (M7) from the core network node (MSC1) via the interface,
- wherein the reset message (M7) is indicating that in the sending core network node (MSC1) a failure has occurred that resulted in a loss of transaction reference information,
- the reset message (M7) comprises the identification of the core network node,
- wherein the radio access network node (RNC2) is adapted to analyse the identification of the core network node (MSC1) and to release the connection (C1) for the terminal between the core network (CN) and the radio access network (RAN) over the interface.

5. Radio access network node (RNC2) for use in a radio access network (RAN) of a telecommunication network, wherein the telecommunication network comprises a core network (CN) with at least two core network nodes (MSC1; MSC2), the radio access network (RAN) with at least two radio access network nodes (RNC1; RNC2), and an interface for connecting the core network (CN) and the radio access network (RAN),
wherein a core network node (MSC1; MSC2) is connectable to at least two radio access network nodes (RNC1; RNC2) of the radio access network (RAN) via the interface and a radio access network node (RNC1; RNC2) is connectable to at least two core network nodes (MSC1; MSC2) of the core network (CN) via the interface, the radio access network node (RNC2) is adapted to:
- receive, over the interface, a relocation request message (M4) from a core network node (MSC1), the relocation request message (M4) comprises an identification of the sending core network node (MSC1),
- wherein the identification is unique within the telecommunication network, identifying the core network node (MSC1) on the level of the Radio Access Network Application Part, RANAP, protocol,
- wherein the relocation request message (M4) is indicating that the radio access network node (RNC2) is selected as radio access network node that is in charge of a connection (RC) between a terminal (T) and the radio access network (RAN),
- wherein the relocation request message (M4) comprises an identification of a connection (C1) for the terminal (T) between the core network (CN) and the radio access network (RAN) over the interface, wherein the identification of the connection (C1) is an lu connection identifier;
- store the identification of the core network node (MSC1) and the identification of the connection (C1) for the terminal (T) between the core network (CN) and the radio access network (RAN) over the interface;
- receive, over the interface, a reset message (M7) from the core network node (MSC1),
- wherein the reset message (M7) indicates that in the sending core network node (MSC1) a failure has occurred that resulted in a loss of transaction reference information,
- the reset message (M7) comprises the identification of the core network node (MSC1),
- analyse the identification of the core network node (MSC1), and
- release the connection (C1) for the terminal between the core network (CN) and the radio access network (RAN) over the interface.

6. A core network node (MSC1) for use in a core network (CN) of a telecommunication network, wherein the telecommunication network comprises the core network (CN) with at least two core network nodes (MSC1; MSC2), a radio access network (RAN) with at least two radio access network nodes (RNC1; RNC2), and an interface for connecting the core network (CN) and the radio access network (RAN),
wherein a core network node (MSC1; MSC2) is connectable to at least two radio access network nodes (RNC1; RNC2) of the radio access network (RAN) via the interface and a radio access network node (RNC1; RNC2) is connectable to at least two core network nodes (MSC1; MSC2) of the core network (CN) via the interface, the core network node (MSC1) is adapted to:
- send, over the interface, a relocation request message (M4) to the radio access network node (RNC2), the relocation request message (M4) comprises an identification of the sending core network node (MSC1),
- wherein the identification is unique within the telecommunication network, identifying the core network node (MSC1) on the level of the Radio Access Network Application Part, RANAP, protocol,
- wherein the relocation request message (M4) is indicating that the radio access network node (RNC2) is selected as radio access network node that is in charge of a connection (RC) between a terminal (T) and the radio access network (RAN),
- wherein the relocation request message (M4) comprises an identification of a connection (C1) for the terminal (T) between the core network (CN) and the radio access network (RAN) over the interface, wherein the identification of the connection (C1) is an lu connection identifier;
- send, over the interface, a reset message (M7) to the radio access network node (RNC2),
- wherein the reset message (M7) indicates that in the sending core network node (MSC1) a failure has occurred that resulted in a loss of transaction reference information,
- the reset message (M7) comprises the identification of the core network node (MSC1).

7. Computer program for controlling a radio access network node (RNC2), comprising computer program code means, adapted to perform the steps of the method of any of the claims 1 to 3 when run on a computer.

8. Computer program for controlling a core network node (MSC1), comprising computer program code means, adapted to perform the steps of the method of any of the claims 1 to 3 when run on a computer.

## Patentansprüche

1. Verfahren zum Steuern eines Telekommunikationsnetzes, das ein Kernnetz (CN) mit mindestens zwei Kernnetzknoten (MSC1; MSC2), ein Funkzugangsnetz (RAN) mit mindestens zwei Funkzugangsnetzknoten (RNC1; RNC2) und eine Schnittstelle zum Verbinden des Kernnetzes (CN) und des Funkzugangsnetzes (RAN) umfasst,
- wobei ein Kernnetzknoten (MSC1; MSC2) über die Schnittstelle mit mindestens zwei Funkzugangsnetzknoten (RNC1; RNC2) des Funkzugangsnetzes (RAN) verbindbar ist und ein Funkzugangsnetzkoten (RNC1; RNC2) über die Schnittstelle mit mindestens zwei Kernnetzknoten (MSC1; MSC2) des Kernnetzes (CN) verbindbar ist,
- wobei eine Verlagerungsanforderungsnachricht (M4) von einem Kernnetzknoten (MSC1) über die Schnittstelle an einen Funkzugangsnetzknoten (RNC2) gesendet wird, wobei die Verlagerungsanforderungsnachricht (M4) eine Identifikation des sendenden Kernnetzknotens (MSC1) umfasst,
- wobei die Identifikation innerhalb des Telekommunikationsnetzes eindeutig ist und den Kernnetzknoten (MSC1) auf der Ebene des Funkzugangsnetz-Anwendungsteil (Radio Access Network Application Part), RANAP,-Protokolls identifiziert, und
- wobei die Verlagerungsanforderungsnachricht (M4) anzeigt, dass der Funkzugangsnetzknoten (RNC2) als Funkzugangsnetzknoten ausgewählt ist, der für eine Verbindung (RC) zwischen einem Endgerät (T) und dem Funkzugangsnetz (RAN) verantwortlich ist,
- wobei die Verlagerungsanforderungsnachricht (M4) eine Identifikation einer Verbindung (C1) für das Endgerät (T) zwischen dem Kernnetz (CN) und dem Funkzugangsnetz (RAN) über die Schnittstelle umfasst, wobei die Identifikation der Verbindung (C1) eine Iu-Verbindungskennung ist, und
- wobei der Funkzugangsnetzknoten (RNC2) die Identifikation des Kernnetzknotens (MSC1) und die Identifikation der Verbindung (C1) für das Endgerät (T) zwischen dem Kernnetz (CN) und dem Funkzugangsnetz (RAN) über die Schnittstelle speichert,
- wobei eine Rücksetznachricht (M7) vom Kernnetzknoten (MSC1) über die Schnittstelle an den Funkzugangsnetzknoten (RNC2) gesendet wird,
- wobei die Rücksetznachricht (M7) anzeigt, dass im sendenden Kernnetzknoten (MSC1) ein Ausfall eingetreten ist, der zu einem Verlust von Transaktionsreferenzinformationen geführt hat,
- die Rücksetznachricht (M7) die Identifikation des Kernnetzknotens umfasst,
- wobei der Funkzugangsnetzknoten (RNC2) die Identifikation des Kernnetzknotens (MSC1) analysiert und die Verbindung (C1) für das Endgerät zwischen dem Kernnetz (CN) und dem Funkzugangsnetz (RAN) über die Schnittstelle freigibt.

2. Verfahren nach Anspruch 1, wobei eine Mobilfunkvermittlungsstellen-Identifikation als Identifikation des Kernnetzknotens (MSC1) verwendet wird.

3. Verfahren nach einem der Ansprüche 1 oder 2, wobei der Funkzugangsnetzknoten (RNC1; RNC2) eine Funknetzsteuerung ist.

4. Telekommunikationsnetz, umfassend ein Kernnetz (CN) mit mindestens zwei Kernnetzknoten (MSC1; MSC2), ein Funkzugangsnetz (RAN) mit mindestens zwei Funkzugangsnetzknoten (RNC1; RNC2) und eine Schnittstelle zum Verbinden des Kernnetzes (CN) und des Funkzugangsnetzes (RAN),
- wobei ein Kernnetzknoten (MSC1; MSC2) über die Schnittstelle mit mindestens zwei Funkzugangsnetzknoten (RNC1; RNC2) des Funkzugangsnetzes (RAN) verbindbar ist, ein Funkzugangsnetzkoten (RNC1; RNC2) über die Schnittstelle mit mindestens zwei Kernnetzknoten (MSC1; MSC2) des Kernnetzes (CN) verbindbar ist,
- die Schnittstelle so ausgelegt ist, dass sie eine Verlagerungsanforderungsnachricht (M4) von einem Kernnetzknoten (MSC1) an einen Funkzugangsnetzknoten (RNC2) überträgt,
- die Verlagerungsanforderungsnachricht (M4) eine Identifikation des sendenden Kernnetzknotens (MSC1) umfasst,
- wobei die Identifikation innerhalb des Telekommunikationsnetzes eindeutig ist und den Kernnetzknoten (MSC1) auf der Ebene des Funkzugangsnetz-Anwendungsteil (Radio Access Network Application Part), RANAP,-Protokolls identifiziert, und
- wobei die Verlagerungsanforderungsnachricht (M4) anzeigt, dass der Funkzugangsnetzknoten (RNC2) als Funkzugangsnetzknoten ausgewählt ist, der für eine Verbindung (RC) zwischen einem Endgerät (T) und dem Funkzugangsnetz (RAN) verantwortlich ist,
- wobei die Verlagerungsanforderungsnachricht (M4) eine Identifikation einer Verbindung (C1) für das Endgerät (T) zwischen dem Kernnetz (CN) und dem Funkzugangsnetz (RAN) über die Schnittstelle umfasst,
- wobei der Funkzugangsnetzknoten (RNC2) so ausgelegt ist, dass er die Identifikation des Kernnetzknotens (MSC1) und die Identifikation der Verbindung (C1) für das Endgerät zwischen dem Kernnetz (CN) und dem Funkzugangsnetz (RAN) über die Schnittstelle speichert,
- wobei der Funkzugangsnetzknoten (RNC2) ferner so ausgelegt ist, dass er eine Rücksetznachricht (M7) vom Kernnetzknoten (MSC1) über die Schnittstelle empfängt,
- wobei die Rücksetznachricht (M7) anzeigt, dass im sendenden Kernnetzknoten (MSC1) ein Ausfall eingetreten ist, der zu einem Verlust von Transaktionsreferenzinformationen geführt hat,
- die Rücksetznachricht (M7) die Identifikation des Kernnetzknotens umfasst,
- wobei der Funkzugangsnetzknoten (RNC2) so ausgelegt ist, dass er die Identifikation des Kernnetzknotens (MSC1) analysiert und die Verbindung (C1) für das Endgerät zwischen dem Kernnetz (CN) und dem Funkzugangsnetz (RAN) über die Schnittstelle freigibt.

5. Funkzugangsnetzknoten (RNC2) zum Verwenden in einem Funkzugangsnetz (RAN) eines Telekommunikationsnetzes, wobei das Telekommunikationsnetz ein Kernnetz (CN) mit mindestens zwei Kernnetzknoten (MSC1; MSC2), das Funkzugangsnetz (RAN) mit mindestens zwei Funkzugangsnetzknoten (RNC1; RNC2) und eine Schnittstelle zum Verbinden des Kernnetzes (CN) und des Funkzugangsnetzes (RAN) umfasst,
wobei ein Kernnetzknoten (MSC1; MSC2) über die Schnittstelle mit mindestens zwei Funkzugangsnetzknoten (RNC1; RNC2) des Funkzugangsnetzes (RAN) verbindbar ist und ein Funkzugangsnetzknoten (RNC1; RNC2) über die Schnittstelle mit mindestens zwei Kernnetzknoten (MSC1; MSC2) des Kernnetzes (CN) verbindbar ist, wobei der Funkzugangsnetzknoten (RNC2) ausgelegt ist zum:
- Empfangen einer Verlagerungsanforderungsnachricht (M4) von einem Kernnetzknoten (MSC1) über die Schnittstelle, wobei die Verlagerungsanforderungsnachricht (M4) eine Identifikation des sendenden Kernnetzknotens (MSC1) umfasst,
- wobei die Identifikation innerhalb des Telekommunikationsnetzes eindeutig ist und den Kernnetzknoten (MSC1) auf der Ebene des Funkzugangsnetz-Anwendungsteil (Radio Access Network Application Part), RANAP,-Protokolls identifiziert,
- wobei die Verlagerungsanforderungsnachricht (M4) anzeigt, dass der Funkzugangsnetzknoten (RNC2) als Funkzugangsnetzknoten ausgewählt ist, der für eine Verbindung (RC) zwischen einem Endgerät (T) und dem Funkzugangsnetz (RAN) verantwortlich ist,
- wobei die Verlagerungsanforderungsnachricht (M4) eine Identifikation einer Verbindung (C1) für das Endgerät (T) zwischen dem Kernnetz (CN) und dem Funkzugangsnetz (RAN) über die Schnittstelle umfasst, wobei die Identifikation der Verbindung (C1) eine Iu-Verbindungskennung ist;
- Speichern der Identifikation des Kernnetzknotens (MSC1) und die Identifikation der Verbindung (C1) für das Endgerät (T) zwischen dem Kernnetz (CN) und dem Funkzugangsnetz (RAN) über die Schnittstelle;
- Empfangen einer Rücksetznachricht (M7) von dem Kernnetzwerkknoten (MSC1) über die Schnittstelle,
- wobei die Rücksetznachricht (M7) anzeigt, dass im sendenden Kernnetzknoten (MSC1) ein Ausfall eingetreten ist, der zu einem Verlust von Transaktionsreferenzinformationen geführt hat,
- die Rücksetznachricht (M7) die Identifikation des Kernnetzknotens (MSC1) umfasst,
- Analysieren der Identifikation des Kernnetzknotens (MSC1), und
- Freigeben der Verbindung (C1) für das Endgerät zwischen dem Kernnetz (CN) und dem Funkzugangsnetz (RAN) über die Schnittstelle.

6. Kernnetzknoten (MSC1) zum Verwenden in einem Kernnetz (CN) eines Telekommunikationsnetzes, wobei das Telekommunikationsnetz ein Kernnetz (CN) mit mindestens zwei Kernnetzknoten (MSC1; MSC2), ein Funkzugangsnetz (RAN) mit mindestens zwei Funkzugangsnetzknoten (RNC1; RNC2) und eine Schnittstelle zum Verbinden des Kernnetzes (CN) und des Funkzugangsnetzes (RAN) umfasst,
wobei ein Kernnetzknoten (MSC1; MSC2) über die Schnittstelle mit mindestens zwei Funkzugangsnetzknoten (RNC1; RNC2) des Funkzugangsnetzes (RAN) verbindbar ist und ein Funkzugangsnetzkoten (RNC1; RNC2) über die Schnittstelle mit mindestens zwei Kernnetzknoten (MSC1; MSC2) des Kernnetzes (CN) verbindbar ist, wobei der Kernnetzknoten (MSC1) ausgelegt ist zum:
- Senden einer Verlagerungsanforderungsnachricht (M4) an den Funkzugangsnetzknoten (RNC2) über die Schnittstelle, wobei die Verlagerungsanforderungsnachricht (M4) eine Identifikation des sendenden Kernnetzknotens (MSC1) umfasst,
- wobei die Identifikation innerhalb des Telekommunikationsnetzes eindeutig ist und den Kernnetzknoten (MSC1) auf der Ebene des Funkzugangsnetz-Anwendungsteil (Radio Access Network Application Part), RANAP,-Protokolls identifiziert,
- wobei die Verlagerungsanforderungsnachricht (M4) anzeigt, dass der Funkzugangsnetzknoten (RNC2) als Funkzugangsnetzknoten ausgewählt ist, der für eine Verbindung (RC) zwischen einem Endgerät (T) und dem Funkzugangsnetz (RAN) verantwortlich ist,
- wobei die Verlagerungsanforderungsnachricht (M4) eine Identifikation einer Verbindung (C1) für das Endgerät (T) zwischen dem Kernnetz (CN) und dem Funkzugangsnetz (RAN) über die Schnittstelle umfasst, wobei die Identifikation der Verbindung (C1) eine Iu-Verbindungskennung ist;
- Senden einer Rücksetznachricht (M7) an den Funkzugangsnetzknoten (RNC2) über die Schnittstelle,
- wobei die Rücksetznachricht (M7) anzeigt, dass im sendenden Kernnetzknoten (MSC1) ein Ausfall eingetreten ist, der zu einem Verlust von Transaktionsreferenzinformationen geführt hat,
- die Rücksetznachricht (M7) die Identifikation des Kernnetzknotens (MSC1) umfasst.

7. Computerprogramm zum Steuern eines Funkzugangsnetzknotens (RNC2), das Computerprogramm-Codemittel umfasst, die bei Ausführen auf einem Computer zum Durchführen der Schritte des Verfahrens nach einem der Ansprüche 1 bis 3 ausgelegt sind.

8. Computerprogramm zum Steuern eines Kernnetzknotens (MSC1), das Computerprogramm-Codemittel umfasst, die bei Ausführen auf einem Computer zum Durchführen der Schritte des Verfahrens nach einem der Ansprüche 1 bis 3 ausgelegt sind.

## Revendications

1. Procédé de commande d'un réseau de télécommunications qui comprend un réseau central (CN) avec au moins deux noeuds de réseau central (MSC1 ; MSC2), un réseau d'accès radio (RAN) avec au moins deux noeuds de réseau d'accès radio (RNC1 ; RNC2) et une interface pour connecter le réseau central (CN) et le réseau d'accès radio (RAN),
- dans lequel un noeud de réseau central (MSC1 ; MSC2) peut être connecté à au moins deux noeuds de réseau d'accès radio (RNC1 ; RNC2) du réseau d'accès radio (RAN) via l'interface et un noeud de réseau d'accès radio (RNC1 ; RNC2) peut être connecté à au moins deux noeuds de réseau central (MSC1 ; MSC2) du réseau central (CN) via l'interface,
- dans lequel un message de demande de relocalisation (M4) est envoyé d'un noeud de réseau central (MSC1) à un noeud de réseau d'accès radio (RNC2) via l'interface, le message de demande de relocalisation (M4) comprenant une identification du noeud de réseau central d'envoi (MSC1),
- dans lequel l'identification est unique à l'intérieur du réseau de télécommunications, identifiant le noeud de réseau central (MSC1) sur le niveau du protocole de sous-système application de réseau d'accès radio (Radio Access Network Application Part), RANAP, et
- dans lequel le message de demande de relocalisation (M4) indique que le noeud de réseau d'accès radio (RNC2) est sélectionné comme un noeud de réseau d'accès radio qui est en charge d'une connexion (RC) entre un terminal (T) et le réseau d'accès radio (RAN),
- dans lequel le message de demande de relocalisation (M4) comprend une identification d'une connexion (C1) pour le terminal (T) entre le réseau central (CN) et le réseau d'accès radio (RAN) via l'interface, dans lequel l'identification de la connexion (C1) est un identifiant de connexion Iu et
- dans lequel le noeud de réseau d'accès radio (RNC2) mémorise l'identification du noeud de réseau central (MSC1) et l'identification de la connexion (C1) pour le terminal (T) entre le réseau central (CN) et le réseau d'accès radio (RAN) via l'interface,
- dans lequel un message de réinitialisation (M7) est envoyé du noeud de réseau central (MSC1) au noeud de réseau d'accès radio (RNC2) via l'interface,
- dans lequel le message de réinitialisation (M7) indique que, dans le noeud de réseau central d'envoi (MSC1), il s'est produit une panne qui a entraîné une perte d'information de référence de transaction,
- le message de réinitialisation (M7) comprend l'identification du noeud de réseau central,
- dans lequel le noeud de réseau d'accès radio (RNC2) analyse l'identification du noeud de réseau central (MSC1) et libère la connexion (C1) pour le terminal entre le réseau central (CN) et le réseau d'accès radio (RAN) via l'interface.

2. Procédé selon la revendication 1, dans lequel une identification de centre de commutation pour services mobiles est utilisée comme identification du noeud de réseau central (MSC1).

3. Procédé selon l'une quelconque des revendications 1 ou 2, dans lequel le noeud de réseau d'accès radio (RNC1 ; RNC2) est un contrôleur de réseau radio.

4. Réseau de télécommunications comprenant un réseau central (CN) avec au moins deux noeuds de réseau central (MSC1 ; MSC2), un réseau d'accès radio (RAN) avec au moins deux noeuds de réseau d'accès radio (RNC1 ; RNC2) et une interface pour connecter le réseau central (CN) et le réseau d'accès radio (RAN),
- dans lequel un noeud de réseau central (MSC1 ; MSC2) peut être connecté à au moins deux noeuds de réseau d'accès radio (RNC1 ; RNC2) du réseau d'accès radio (RAN) via l'interface, un noeud de réseau d'accès radio (RNC1 ; RNC2) peut être connecté à au moins deux noeuds de réseau central (MSC1 ; MSC2) du réseau central (CN) via l'interface,
- l'interface est conçue pour transmettre un message de demande de relocalisation (M4) d'un noeud de réseau central (MSC1) à un noeud de réseau d'accès radio (RNC2),
- le message de demande de relocalisation (M4) comprenant une identification du noeud de réseau central d'envoi (MSC1),
- dans lequel l'identification est unique à l'intérieur du réseau de télécommunications, identifiant le noeud de réseau central (MSC1) sur le niveau du protocole de sous-système application de réseau d'accès radio (Radio Access Network Application Part), RANAP, et
- dans lequel le message de demande de relocalisation (M4) indique que le noeud de réseau d'accès radio (RNC2) est sélectionné comme un noeud de réseau d'accès radio qui est en charge d'une connexion (RC) entre un terminal (T) et le réseau d'accès radio (RAN),
- dans lequel le message de demande de relocalisation (M4) comprend une identification d'une connexion (C1) pour le terminal (T) entre le réseau central (CN) et le réseau d'accès radio (RAN) via l'interface,
- dans lequel le noeud de réseau d'accès radio (RNC2) est conçu pour mémoriser l'identification du noeud de réseau central (MSC1) et l'identification de la connexion (C1) pour le terminal entre le réseau central (CN) et le réseau d'accès radio (RAN) via l'interface,
- dans lequel le noeud de réseau d'accès radio (RNC2) est en outre conçu pour recevoir un message de réinitialisation (M7) depuis le noeud de réseau central (MSC1) via l'interface,
- dans lequel le message de réinitialisation (M7) indique que, dans le noeud de réseau central d'envoi (MSC1), il s'est produit une panne qui a entraîné une perte d'information de référence de transaction,
- le message de réinitialisation (M7) comprend l'identification du noeud de réseau central,
- dans lequel le noeud de réseau d'accès radio (RNC2) est conçu pour analyser l'identification du noeud de réseau central (MSC1) et pour libérer la connexion (C1) pour le terminal entre le réseau central (CN) et le réseau d'accès radio (RAN) via l'interface.

5. Noeud de réseau d'accès radio (RNC2) pour une utilisation dans un réseau d'accès radio (RAN) d'un réseau de télécommunications, dans lequel le réseau de télécommunications comprend un réseau central (CN) avec au moins deux noeuds de réseau central (MSC1 ; MSC2), le réseau d'accès radio (RAN) avec au moins deux noeuds de réseau d'accès radio (RNC1 ; RNC2), et une interface pour connecter le réseau central (CN) et le réseau d'accès radio (RAN),
dans lequel un noeud de réseau central (MSC1 ; MSC2) peut être connecté à au moins deux noeuds de réseau d'accès radio (RNC1 ; RNC2) du réseau d'accès radio (RAN) via l'interface et un noeud de réseau d'accès radio (RNC1 ; RNC2) peut être connecté à au moins deux noeuds de réseau central (MSC1 ; MSC2) du réseau central (CN) via l'interface, le noeud de réseau d'accès radio (RNC2) est conçu pour :
- recevoir, via l'interface, un message de demande de relocalisation (M4) depuis un noeud de réseau central (MSC1), le message de demande de relocalisation (M4) comprend une identification du noeud de réseau central d'envoi (MSC1),
- dans lequel l'identification est unique à l'intérieur du réseau de télécommunications, identifiant le noeud de réseau central (MSC1) sur le niveau de protocole de sous-système application de réseau d'accès radio (Radio Access Network Application Part), RANAP,
- dans lequel le message de demande de relocalisation (M4) indique que le noeud de réseau d'accès radio (RNC2) est sélectionné comme un noeud de réseau d'accès radio qui est en charge d'une connexion (RC) entre un terminal (T) et le réseau d'accès radio (RAN),
- dans lequel le message de demande de relocalisation (M4) comprend une identification d'une connexion (C1) pour le terminal (T) entre le réseau central (CN) et le réseau d'accès radio (RAN) via l'interface, dans lequel l'identification de la connexion (C1) est un identifiant de connexion Iu ;
- mémoriser l'identification du noeud de réseau central (MSC1) et l'identification de la connexion (C1) pour le terminal (T) entre le réseau central (CN) et le réseau d'accès radio (RAN) via l'interface ;
- recevoir, via l'interface, un message de réinitialisation (M7) depuis le noeud de réseau central (MSC1),
- dans lequel le message de réinitialisation (M7) indique que, dans le noeud de réseau central d'envoi (MSC1), il s'est produit une panne qui a entraîné une perte d'information de référence de transaction,
- le message supplémentaire (M7) comprend l'identification du noeud de réseau central (MSC1),
- analyser l'identification du noeud de réseau central (MSC1), et
- libérer la connexion (C1) pour le terminal entre le réseau central (CN) et le réseau d'accès radio (RAN) via l'interface.

6. Noeud de réseau central (MSC1) pour une utilisation dans un réseau central (CN) d'un réseau de télécommunications, dans lequel le réseau de télécommunications comprend le réseau central (CN) avec au moins deux noeuds de réseau central (MSC1 ; MSC2), un réseau d'accès radio (RAN) avec au moins deux noeuds de réseau d'accès radio (RNC1 ; RNC2), et une interface pour connecter le réseau central (CN) et le réseau d'accès radio (RAN),
dans lequel un noeud de réseau central (MSC1 ; MSC2) peut être connecté à au moins deux noeuds de réseau d'accès radio (RNC1 ; RNC2) du réseau d'accès radio (RAN) via l'interface et un noeud de réseau d'accès radio (RNC1 ; RNC2) peut être connecté à au moins deux noeuds de réseau central (MSC1 ; MSC2) du réseau central (CN) via l'interface, le noeud de réseau central (MSC1) est conçu pour :
- envoyer, via l'interface, un message de demande de relocalisation (M4) au noeud de réseau d'accès radio (RNC2), le message de demande de relocalisation (M4) comprend une identification du noeud de réseau central d'envoi (MSC1),
- dans lequel l'identification est unique à l'intérieur du réseau de télécommunications, identifiant le noeud de réseau central (MSC1) sur le niveau de protocole de sous-système application de réseau d'accès radio (Radio Access Network Application Part), RANAP,
- dans lequel le message de demande de relocalisation (M4) indique que le noeud de réseau d'accès radio (RNC2) est sélectionné comme un noeud de réseau d'accès radio qui est en charge d'une connexion (RC) entre un terminal (T) et le réseau d'accès radio (RAN),
- dans lequel le message de demande de relocalisation (M4) comprend une identification d'une connexion (C1) pour le terminal (T) entre le réseau central (CN) et le réseau d'accès radio (RAN) via l'interface, dans lequel l'identification de la connexion (C1) est un identifiant de connexion Iu ;
- envoyer, via l'interface, un message de réinitialisation (M7) au noeud de réseau d'accès radio (RNC2),
- dans lequel le message de réinitialisation (M7) indique que, dans le noeud de réseau central d'envoi (MSC1), il s'est produit une panne qui a entraîné une perte d'information de référence de transaction,
- le message de réinitialisation (M7) comprend l'identification du noeud de réseau central (MSC1).

7. Programme informatique pour commander un noeud de réseau d'accès radio (RNC2), comprenant des moyens de code de programme informatique, conçus pour mettre en oeuvre les étapes du procédé selon l'une quelconque des revendications 1 à 3, lorsqu'il est exécuté sur un ordinateur.

8. Programme informatique pour commander un noeud de réseau central (MSC1), comprenant des moyens de code de programme informatique, conçu pour mettre en oeuvre les étapes du procédé selon l'une quelconque des revendications 1 à 3, lorsqu'il est exécuté sur un ordinateur.
